# EUROPEAN PATENT APPLICATION

(11) **EP 4 492 107 A1**
(43) Date of publication of application: **15.01.2025**
(21) Application number: 23815937.0
(22) Date of filing: 25.05.2023
(51) Int. Cl.: G02B 6/36, B65H 54/12, B65H 75/00, B65H 75/14

(54) **CLEANING TOOL**

(30) Priority: 03.06.2022 JP 2022091093
(71) Applicant: FUJIKURA LTD., Koto-ku Tokyo 135-8512 (JP)
(72) Inventor: WATANABE, Junya, Sakura-shi, Chiba 285-8550 (JP); FUJITA, Shunsuke, Sakura-shi, Chiba 285-8550 (JP); SAKAGUCHI, Yuya, Sakura-shi, Chiba 285-8550 (JP); SAWADA, Kazuaki, Sakura-shi, Chiba 285-8550 (JP); NAKANE, Junichi, Sakura-shi, Chiba 285-8550 (JP)
(74) Representative: Maiwald GmbH
(86) International application number: PCT/JP2023/019572
(87) International publication number: WO 2023/234180

(57) **Abstract**

[Problem] To inhibit a cleaning element being wound up onto a bobbin from crossing over the bobbin's flange. [Solution] A cleaning tool according to the present disclosure includes: a cleaning element; a head member configured to press the cleaning element against an object to be cleaned; a supply bobbin on which the cleaning element is wound, the supply bobbin configured to supply the cleaning element to the head member; and a winding bobbin configured to wind up the cleaning element from the supply bobbin via the head member. The winding bobbin includes a barrel part onto which the cleaning element is to be wound, and a pair of flanges disposed respectively on both ends of the barrel part. The barrel part has a tapered surface which is inclined between the pair of flanges.

## Description

### TECHNICAL FIELD

The present disclosure relates to a cleaning tool.

The present application claims priority based on Japanese Patent Application No. 2022-091093 filed on June 3, 2022, the contents of which are incorporated herein by reference.

### BACKGROUND ART

Cleaning tools for cleaning a connection end face of an optical connector to reduce connection loss between optical connectors are known in the art. PTL 1 discloses a cleaning tool including: a shaft for pressing a cleaning element against a joining end face of a connector, the shaft having a distal end (head); a supply reel for supplying the cleaning element to the head; and a winding reel for taking up the cleaning element from the head in association with a cleaning operation. More specifically, the cleaning element on the supply reel is retrieved by the winding reel via the head every time the cleaning operation is conducted. Note that predetermined tension is applied to the cleaning element, and the cleaning element is stretched taut between the supply reel and the winding reel. Typically, these reels have a so-called bobbin-shaped structure constituted by a barrel part serving as a winding shaft, and a pair of flanges.

### CITATION LIST

### PATENT LITERATURE

PTL 1: Japanese Patent Application Laid-open Publication No. 2014-206733

### SUMMARY

### TECHNICAL PROBLEM

This type of cleaning tool, however, has no mechanism for winding up the cleaning element evenly in a well-balanced manner onto the retrieval-side bobbin. Therefore, the position of the cleaning element wound onto the bobbin may be unevenly biased to one side. If the cleaning element keeps getting wound unevenly onto a biased position of the bobbin, the cleaning element may cross over the flange of the bobbin, making it impossible to wind the cleaning element around the barrel part of the bobbin.

An objective of the present invention is to provide a cleaning tool in which a cleaning element being wound up onto a bobbin can be inhibited from crossing over the bobbin's flange.

### SOLUTION TO PROBLEM

A primary aspect of the disclosure to achieve the aforementioned objective relates to a cleaning tool including: a cleaning element; a head member configured to press the cleaning element against an object to be cleaned; a supply bobbin on which the cleaning element is wound, the supply bobbin configured to supply the cleaning element to the head member; and a winding bobbin configured to wind up the cleaning element from the supply bobbin via the head member. The winding bobbin includes a barrel part onto which the cleaning element is to be wound, and a pair of flanges disposed respectively on both ends of the barrel part. The barrel part has a tapered surface which is inclined between the pair of flanges.

Other features of the invention will become apparent from the following description of the present Specification and Drawings.

### EFFECTS OF INVENTION

With the present invention, a cleaning element being wound up onto a bobbin can be inhibited from crossing over the bobbin's flange.

### BRIEF DESCRIPTION OF DRAWINGS

[Fig. 1] Fig. 1A is a perspective view of a cleaning tool 100 of a first embodiment. Fig. 1B is a perspective view of the cleaning tool 100 in a state where casing 40A has been removed.
[Fig. 2] Fig. 2 is an exploded view of the cleaning tool 100.
[Fig. 3] Fig. 3 is another exploded view of the cleaning tool 100.
[Fig. 4] Fig. 4A is an explanatory diagram of a winding mechanism 91. Fig. 4B is an explanatory diagram of a ratchet mechanism 91B.
[Fig. 5] Fig. 5 is an explanatory diagram of a rotating mechanism 92.
[Fig. 6] Fig. 6A is an explanatory diagram of a winding bobbin 30 of the first embodiment. Fig. 6B is an explanatory diagram of a winding bobbin 30 of a comparative example.
[Fig. 7] Fig. 7 is an explanatory diagram illustrating a case where a cleaning element 3 is wound onto the winding bobbin 30 of the comparative example.
[Fig. 8] Figs. 8A and 8B are explanatory diagrams of a first cause.
[Fig. 9] Figs. 9A and 9B are explanatory diagrams of a second cause.
[Fig. 10] Fig. 10 is an explanatory diagram of an end part 3A of the cleaning element 3 fixed to the winding bobbin 30.
[Fig. 11] Fig. 11 is an explanatory diagram of a second embodiment.
[Fig. 12] Fig. 12 is an explanatory diagram of the shape of a guide pin 512' of the second embodiment.
[Fig. 13] Figs. 13A and 13B are explanatory diagrams illustrating a method for manufacturing the guide pin 512' of the second embodiment.
[Fig. 14] Figs. 14A and 14B are explanatory diagrams illustrating the shape of a guide pin 512" of a first modified example and a method for manufacturing the same.
[Fig. 15] Fig. 15 is an explanatory diagram of a guide pin of a second modified example.
[Fig. 16] Fig. 16 is an explanatory diagram in which a retaining member 23 illustrated in Fig. 15 has been removed.

### DESCRIPTION OF EMBODIMENTS

Embodiments as examples of the present invention are described below according to the following Specification and Drawings.

### FIRST EMBODIMENT:

### {Structure}

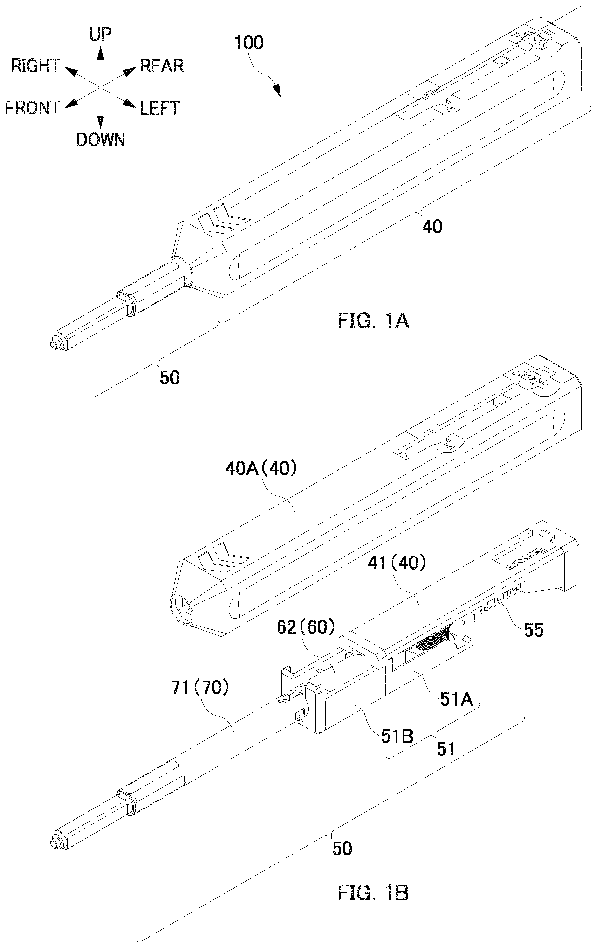

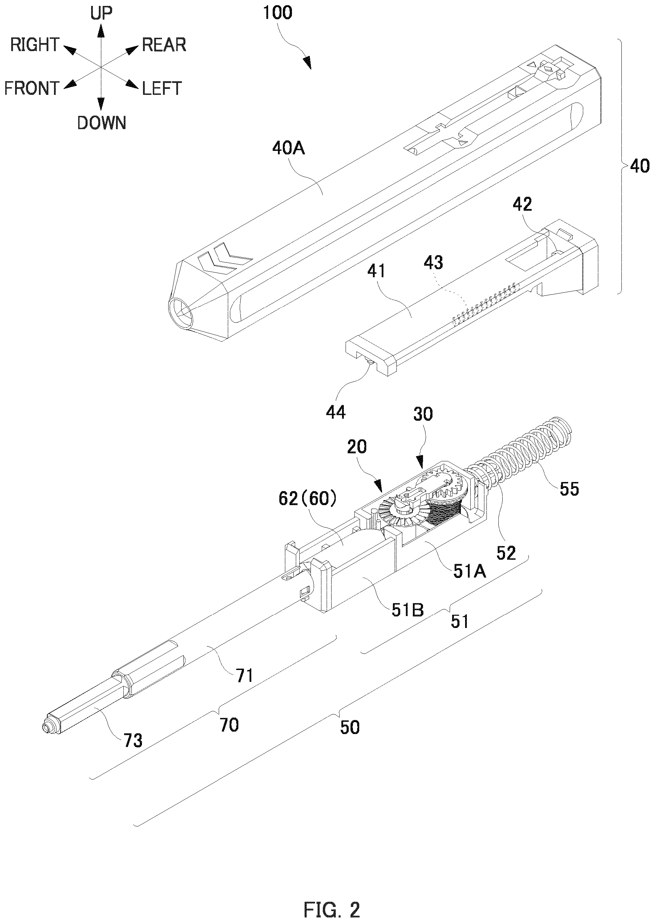

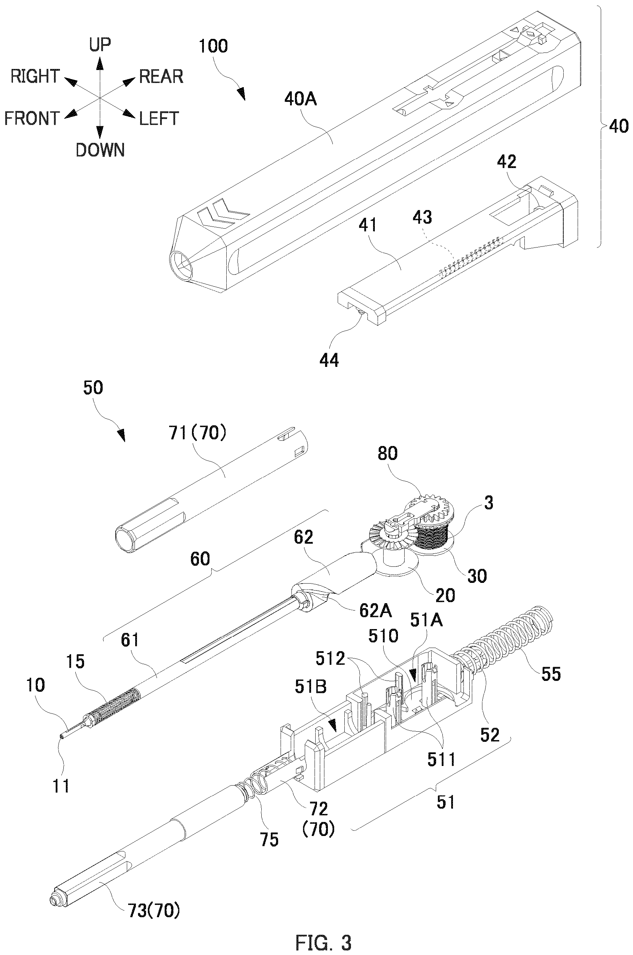

Fig. 1A is a perspective view of a cleaning tool 100 of a first embodiment. Fig. 1B is a perspective view of the cleaning tool 100 in a state where casing 40A has been removed. Fig. 2 is an exploded view of the cleaning tool 100. Fig. 3 is another exploded view of the cleaning tool 100.

In the description below, various directions in the embodiments are defined as follows.

"Up-down direction" refers to the direction parallel to a rotation rod 511 (see Fig. 3) for a winding bobbin 30, wherein "down" refers to the base side of the rotation rod 511 (the side toward a bottom surface 510 of a housing body 51), and "up" refers to the tip-end side of the rotation rod 511 (the side opposite from the bottom surface 510 of the housing body 51). Note that the up-down direction corresponds to the direction in which a pair of flanges 32 of the winding bobbin 30 is disposed. Further, the base side of the rotation rod 511 may be referred to as "base-end side", and the side opposite from the base of the rotation rod 511 may be referred to as "tip-end side".

"Front-rear direction" refers to the direction in which a head member 10 (see Fig. 3) and an object to be cleaned (an optical connector (not illustrated)) approach and separate from one another, wherein "front" refers to the side toward the object to be cleaned as viewed from the head member 10, and "rear" refers to the opposite side therefrom. The "front-rear direction" corresponds to the direction in which a tool body 40 and an insertion part 50 move relative to one another.

"Left-right direction" refers to the direction perpendicular to both the up-down direction and the front-rear direction, wherein "right" refers to the right-hand side as viewed from rear to front, and "left" refers to the opposite side therefrom.

The cleaning tool 100 is a tool configured to clean an object to be cleaned. An example of an object to be cleaned is an optical connector, and more specifically, a connection end face of a ferrule of an optical connector. The cleaning tool 100 includes a tool body 40, an insertion part 50 which extends out from the tool body 40, a head member 10 which is passed through the interior of the insertion part 50, a cleaning element 3 to be wrapped around the head member 10, a supply bobbin 20 on which an unused part of the cleaning element 3 is wound, and a winding bobbin 30 configured to wind up a used part of the cleaning element 3. Herein, components that are at least necessary in the cleaning tool 100 of the present embodiment for achieving the objective are the cleaning element 3, the head member 10, the supply bobbin 20, and the winding bobbin 30.

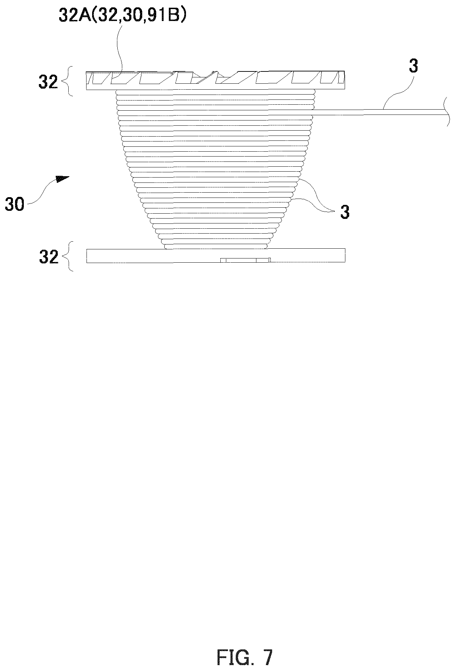

The cleaning element 3 is a long-length member for cleaning an object to be cleaned. Herein, the cleaning element 3 is a string-shaped (thread-shaped) member, but it may be a ribbon-shaped (belt-shaped) member. Note, however, that in cases where the cleaning element 3 is string-shaped, it is more likely that the cleaning element 3 will be kept getting wound onto the winding bobbin 30 at an unevenly biased position (described further below; see Fig. 7), as compared to cases where the cleaning element 3 is ribbon-shaped, and therefore, the cleaning tool 100 of the present embodiment is particularly effective in cases where the cleaning element 3 is string-shaped.

The head member 10 is a member configured to press the cleaning element 3 against an object to be cleaned. The head member 10 is biased toward the front by a head spring 15. The front end of the head member 10 is a head part 11 constituting a pressing surface for pressing the cleaning element 3 against an object to be cleaned. The cleaning element 3 is wrapped around the head part 11 (pressing surface). In association with a movement of being pressed against the object to be cleaned, the head member 10 rotates about the front-rear direction. By making the head member 10 rotate, the cleaning ability can be improved. Note, however, that the head member 10 does not have to rotate.

A bobbin, which constitutes the supply bobbin 20 or the winding bobbin 30, is a member onto which the cleaning element 3 is to be wound, and is a member also called a reel, spool, spindle, etc. The bobbin, which constitutes the supply bobbin 20 or the winding bobbin 30, includes a barrel part and a pair of flanges. The barrel part is where the cleaning element 3 is wound. Herein, the barrel part is formed in a hollow cylindrical shape such that a rotation rod 511 (see Fig. 3) can be passed therethrough. The flanges have a brim-like shape, and are disposed respectively on both ends of the barrel part.

The supply bobbin 20 is a bobbin configured to supply the cleaning element 3 to the head member 10. An unused part of the cleaning element 3 is wound in advance onto the supply bobbin 20. The supply bobbin 20 rotates about a rotation rod 511 when the cleaning element 3 is drawn out from the supply bobbin 20.

The winding bobbin 30 is a bobbin configured to wind up a used part of the cleaning element 3. The winding bobbin 30 may also be called a retrieval bobbin. The winding bobbin 30 rotates about a rotation rod 511. As the winding bobbin 30 rotates, the cleaning element 3 is wound onto the barrel part of the winding bobbin 30 (i.e., the cleaning element 3 is retrieved). The shape of the winding bobbin 30 will be described further below.

In association with a movement in which the head member 10 is pressed against an object to be cleaned, the tool body 40 and the insertion part 50 move relative to one another along the front-rear direction. Further, the winding bobbin 30 rotates due to the relative movement between the tool body 40 and the insertion part 50. Furthermore, the head member 10 rotates due to the relative movement between the tool body 40 and the insertion part 50. This point is described below.

The tool body 40 constitutes a main body of the cleaning tool 100. An operator holds the tool body 40 and presses the head member 10 against an object to be cleaned, to clean an optical connector (object to be cleaned). The tool body 40 includes a casing 40A and a support body 41.

The casing 40A is a member constituting an exterior of the tool body 40. The support body 41 and the bobbins (the supply bobbin 20 and the winding bobbin 30) on which the cleaning element 3 is wound are housed inside the casing 40A. A part of the insertion part 50 (housing body 51 etc.) and a coil spring 55 are also housed inside the casing 40A.

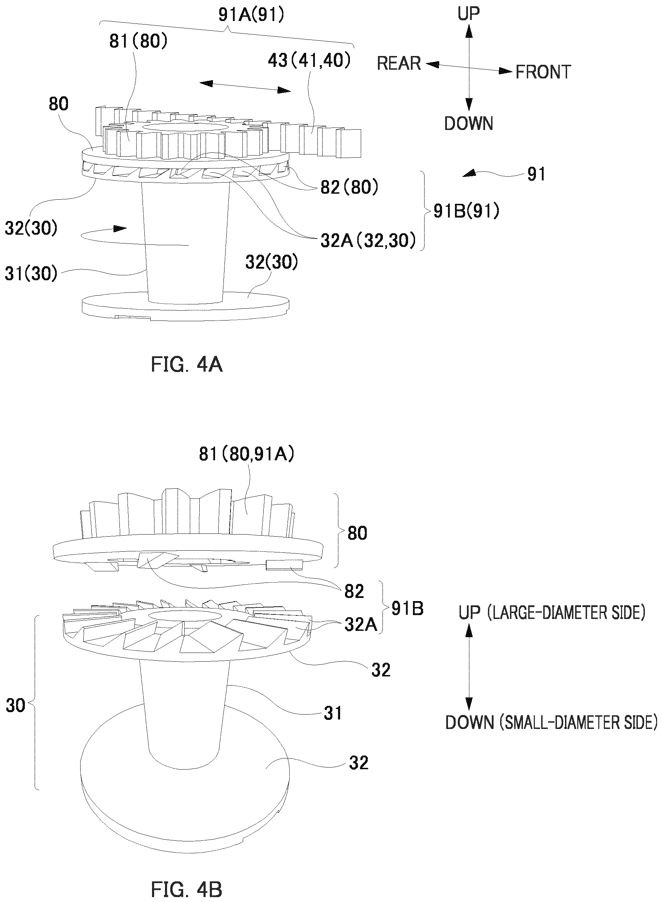

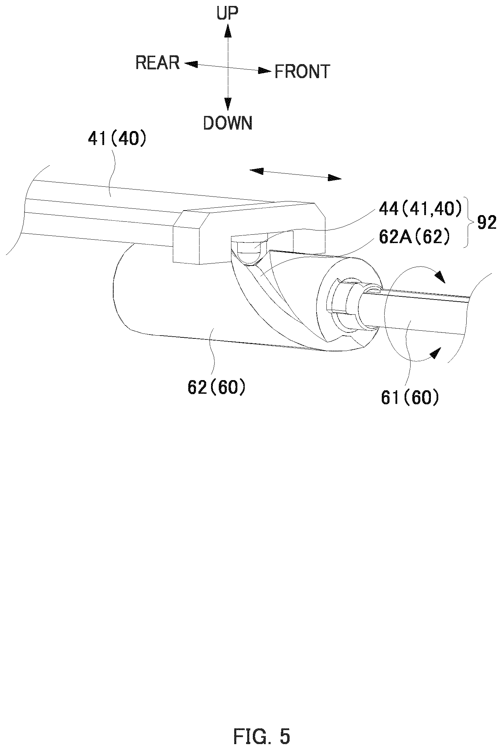

The support body 41 is a member configured to support an end part (rear end) of a coil spring 55. The support body 41 is housed inside the casing 40A in a state fixed to the casing 40A. The support body 41 includes a support part 42, a rack 43, and a protrusion part 44. The support part 42 supports an end part of the coil spring 55. The rack 43 is a spur gear, and constitutes a winding mechanism 91 (described below; see Fig. 4A). The protrusion part 44 is configured in a protruding manner so as to fit into a cam groove part 62A, and constitutes a rotating mechanism 92 (described below; see Fig. 5).

The insertion part 50 is movable in the front-rear direction relative to the tool body 40. A front part of the insertion part 50 extends out toward the front side from the tool body 40. The head member 10 is located on the front side of the insertion part 50. The insertion part 50 includes the head part 11, as well as a housing body 51, a rotating shaft 60, and a cylinder body 70.

The housing body 51 is located in a rear part of the insertion part 50. In association with relative movement of the insertion part 50 to the tool body 40, the housing body 51 moves relative to the support body 41. The housing body 51 includes a first housing part 51A, a second housing part 51B, and a spring retaining part 52.

The first housing part 51A is configured to house the supply bobbin 20 and the winding bobbin 30. The first housing part 51A includes rotation rods 511 and guide pins 512. The rotation rods 511 are formed in a shaft shape (rod shape; cylinder shape; pin shape) and serve as the center of rotation of the respective bobbins. The guide pins 512 are formed in a pin shape so as to guide the cleaning element 3. The guide pins 512 are formed along the same direction as the axis of the rotation rods 511. The rotation rods 511 and the guide pins 512 protrude upward from the bottom surface (base end) of the first housing part 51A. The shape of the guide pin 512 will be described further below. Note that the guide pins 512 may be a separate member from the first housing part 51A on which the rotation rods 511 are formed (described further below).

The second housing part 51B is configured to rotatably house a rotating cylinder part 62 of the rotating shaft 60. The second housing part 51B is located more toward the side of the head member 10 (toward the front side) than the first housing part 51A.

The spring retaining part 52 is configured to retain an end part of the coil spring 55. The coil spring 55 is a member configured to bias the housing body 51 toward the front side (the side of the object to be cleaned) with respect to the support body 41. At the time of cleaning, the insertion part 50 moves rearward with respect to the tool body 40 (i.e., the housing body 51 moves rearward with respect to the support body 41), and after cleaning, the force of the coil spring 55 causes the insertion part 50 to move forward with respect to the tool body 40, and thereby, the cleaning tool 100 can be restored to its initial state.

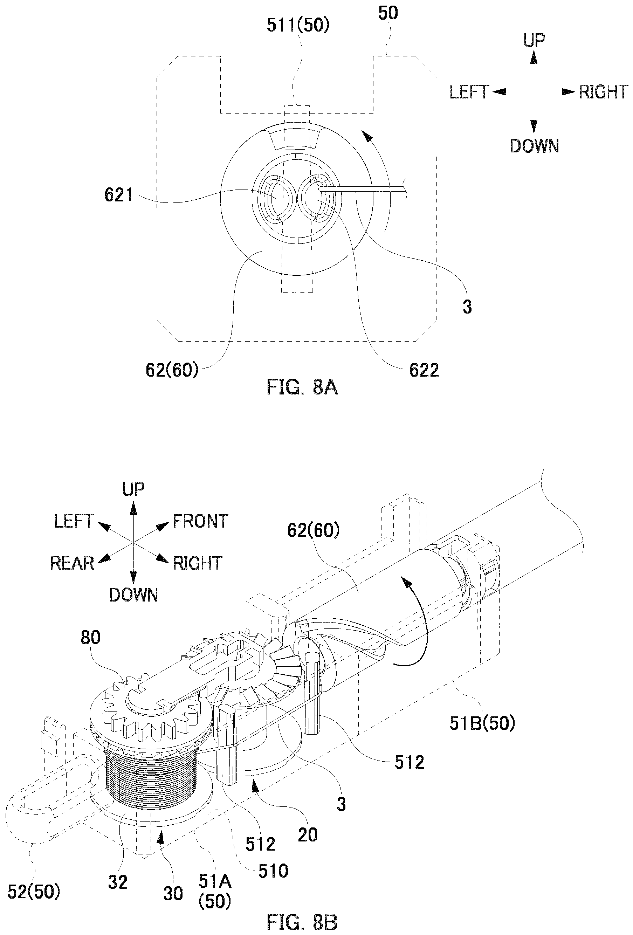

The rotating shaft 60 is a member (rotating member) configured to rotate the head member 10 (see Fig. 3). The rotating shaft 60 is configured to retain the head member 10 in a state where rotation about the front-rear direction is restricted. The rotating shaft 60 rotates about the front-rear direction. The head member 10 rotates in association with rotation of the rotating shaft 60. The rotating shaft 60 has two insertion holes (see Fig. 8A; first insertion hole 621 and second insertion hole 622) along the front-rear direction. One insertion hole (first insertion hole 621) is configured to pass therethrough an unused part of the cleaning element 3 to be supplied to the head member 10. The other insertion hole (second insertion hole 622) is configured to pass therethrough a used part of the cleaning element 3 to be transported from the head member 10 to the winding bobbin 30.

As illustrated in Fig. 3, the rotating shaft 60 includes a shaft part 61 and a rotating cylinder part 62. The shaft part 61 transmits rotating force to the head member 10. The shaft part 61 is formed in a rod shape (cylindrical shape) so as to constitute a front part of the rotating shaft 60. As illustrated in Fig. 3, the head member 10 is retained at the front end of the shaft part 61. The cleaning element 3 is transported along the front-rear direction through the shaft part 61. The rotating cylinder part 62 is formed in a circular-cylindrical shape so as to constitute a part of the rotating shaft 60, and is located more toward the rear than the shaft part 61. As illustrated in Fig. 2, the rotating cylinder part 62 is housed in the second housing part 51B of the housing body 51. A cam groove part 62A is formed in the outer circumferential surface of the rotating cylinder part 62. The cam groove part 62A is a helical groove part, and constitutes a rotating mechanism 92 (described below; see Fig. 5).

The cylinder body 70 is located in the front part of the insertion part 50. The cylinder body 70 includes a base cylinder part 71, an abutment part 72, a tip-end cylinder part 73, and a cylinder part spring 75. The base cylinder part 71 and the abutment part 72 are fixed to the housing body 51. The tip-end cylinder part 73 is slidable in the front-rear direction with respect to the base cylinder part 71 and the abutment part 72. The tip-end cylinder part 73 is retained in such a state that it is biased toward the front side by the cylinder part spring 75 and that it can move rearward with respect to the housing body 51. The cylinder part spring 75 is disposed between the housing body 51 and the tip-end cylinder part 73. At the time of cleaning, an operator holds the tool body 40 and brings the head member 10 of the insertion part 50 of the cleaning tool 100 into contact with an object to be cleaned (a ferrule of an optical connector). Then, in a state where the head member 10 is placed in contact with the object to be cleaned, the operator further presses the head member 10 against the object to be cleaned. At this time, the tip-end cylinder part 73 moves rearward with respect to the base cylinder part 71, and the rear end of the tip-end cylinder part 73 abuts against the abutment part 72. When the operator further presses the head member 10 against the object to be cleaned from the state where the tip-end cylinder part 73 is in abutment against the abutment part 72, the housing body 51 moves rearward with respect to the tool body 40 (i.e., the tool body 40 and the insertion part 50 move relative to one another in the front-rear direction). This relative movement between the tool body 40 and the insertion part 50 causes the winding bobbin 30 to rotate and also causes the head member 10 to rotate.

Fig. 4A is an explanatory diagram of a winding mechanism 91. Fig. 4B is an explanatory diagram of a ratchet mechanism 91B. In Fig. 4B, for the sake of explanation, the winding bobbin 30 and gear member 80 are illustrated in a separated state.

The cleaning tool 100 includes a winding mechanism 91. The winding mechanism 91 causes the winding bobbin 30 to rotate by the relative movement between the tool body 40 and the insertion part 50. The winding mechanism 91 includes the rack 43 on the support body 41, a gear member 80, and a bobbin-side ratchet gear 32A on the winding bobbin 30 (see Fig. 4B). Stated differently, the winding mechanism 91 includes a rack-and-pinion mechanism 91A and a ratchet mechanism 91B. It should be noted that the winding mechanism 91 is not limited to a mechanism constituted by a rack-and-pinion mechanism 91A and a ratchet mechanism 91B, and may be any mechanism capable of causing the winding bobbin 30 to rotate by the relative movement between the tool body 40 and the insertion part 50.

The rack-and-pinion mechanism 91A includes the rack 43 (spur gear) and a pinion 81. The rack 43 is formed on the support body 41 such that teeth are lined up along the front-rear direction (see the dotted line in Figs. 2 and 3). The pinion 81 is a small cylindrical gear, and is disposed on the gear member 80.

The gear member 80 transmits motive power between the rack 43 and the winding bobbin 30. The gear member 80 is disposed on the upper side of the winding bobbin 30 and is disposed coaxially with the winding bobbin 30, and is housed in the first housing part 51A together with the winding bobbin 30. The gear member 80 includes the pinion 81 and a gear-side ratchet gear 82. The gear member 80 undergoes bidirectional rotational motion (oscillation) about the rotation rod 511 by the relative movement (linear motion) between the insertion part 50 and the tool body 40.

The ratchet mechanism 91B restricts the rotating direction to one direction. Herein, the rotating direction in which the winding bobbin 30 can wind up the cleaning element 3 is referred to as the "winding direction". If the winding bobbin 30 is allowed to rotate in the opposite direction from the winding direction, the cleaning element 3 will be supplied in the opposite direction and the cleaning element 3 will lose tension with respect to the head member 10, making it impossible to conduct proper cleaning. Therefore, there is a need to restrict the rotating direction of the winding bobbin 30 to one direction (the winding direction). The ratchet mechanism 91B includes the gear-side ratchet gear 82 and the bobbin-side ratchet gear 32A.

When the gear member 80 rotates in the opposite direction from the winding direction, the gear-side ratchet gear 82 and the bobbin-side ratchet gear 32A will idle, and the winding bobbin 30 will not rotate. On the other hand, when the gear member 80 rotates in the winding direction, the gear-side ratchet gear 82 and the bobbin-side ratchet gear 32A mesh with one another and the rotation of the gear member 80 is transmitted to the winding bobbin 30, thereby causing the winding bobbin 30 to rotate about the rotation rod 511. In this way, the winding mechanism 91 causes the winding bobbin 30 to rotate by the relative movement between the tool body 40 and the insertion part 50.

Fig. 5 is an explanatory diagram of a rotating mechanism 92.

The cleaning tool 100 includes a rotating mechanism 92. The rotating mechanism 92 causes the head member 10 to rotate about the front-rear direction by the relative movement between the tool body 40 and the insertion part 50. The rotating mechanism 92 is constituted by a cylindrical cam mechanism, and includes the protrusion part 44 on the support body 41 and the cam groove part 62A of the rotating cylinder part 62 of the rotating shaft 60. Note, however, that the rotating mechanism 92 is not limited to a cylindrical cam mechanism. The protrusion part 44 and the cam groove part 62A are engaged, and the relative movement between the tool body 40 and the insertion part 50 in the front-rear direction causes the rotating cylinder part 62 to rotate about the front-rear direction. In this way, when the tool body 40 and the insertion part 50 undergo relative movement (linear motion), the head member 10 rotates together with the rotating shaft 60 about the front-rear direction.

It should be noted that the winding bobbin 30 may rotate in the winding direction without employing the relative movement between the tool body 40 and the insertion part 50. Also, the head member 10 may rotate without employing the relative movement between the tool body 40 and the insertion part 50. Moreover, the head member 10 does not have to rotate at the time of cleaning.

### {Winding Bobbin 30}

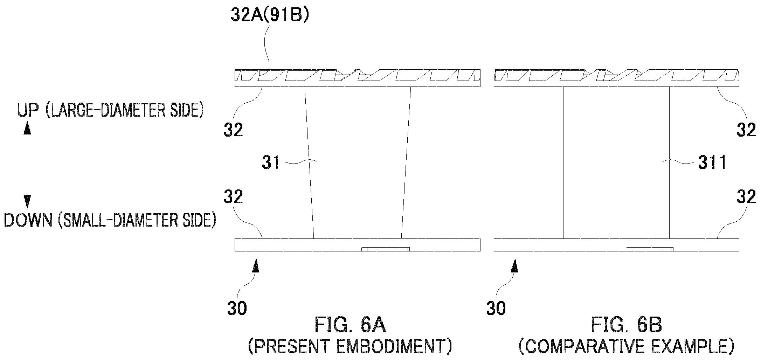

Fig. 6A is an explanatory diagram of the winding bobbin 30 of the first embodiment. Fig. 6B is an explanatory diagram of a winding bobbin 30 of a comparative example.

In both Figs. 6A and 6B, the winding bobbin 30 includes a pair of flanges 32, but the shape of the barrel part 311 of Fig. 6B is different from the shape of the barrel part 31 of Fig. 6A. The barrel part 31 (311) is formed along the axial direction of the rotation rod 511, and is configured to wind up the cleaning element 3. The barrel part 31 has a circular barrel-like shape, and the rotation rod 511 (see Fig. 3) is passed through the barrel part 31. The flanges 32 are disposed respectively on both ends of the barrel part 31 (311). The flanges 32 inhibit the cleaning element 3 from coming off from the barrel part 31 (311). The barrel part 311 of the winding bobbin 30 of Fig. 6B has a circular cylinder shape with a constant diameter.

Fig. 7 is an explanatory diagram illustrating a case where the cleaning element 3 is wound onto the winding bobbin 30 of Fig. 6B. As illustrated in the figure, there are cases in which the position of the cleaning element 3 wound on the winding bobbin 30 becomes unevenly biased. The following two causes, for example, are thought to be the reason that the position of the cleaning element 3 wound on the winding bobbin 30 becomes unevenly biased.

Figs. 8A and 8B are explanatory diagrams of a first cause.

When the winding bobbin 30 rotates in the winding direction, the housing body 51 moves rearward with respect to the support body 41, and thus, the rotating shaft 60 rotates about the front-rear direction. Herein, as illustrated in Fig. 8A, when the winding bobbin 30 rotates in the winding direction, the rotating shaft 60 rotates counterclockwise. Further, as illustrated in Fig. 8A, the rotating shaft 60 has two insertion holes (the first insertion hole 621 and the second insertion hole 622), and the used cleaning element 3 passes through the second insertion hole 622 on the right side of Fig. 8A. Since the second insertion hole 622 is disposed eccentrically with respect to the rotation axis of the rotating shaft 60, when the winding bobbin 30 rotates in the winding direction, the rotating shaft 60 rotates counterclockwise as illustrated in Fig. 8A, and thus, the used cleaning element 3 is displaced in the upward direction. As a result, as illustrated in Fig. 7, the cleaning element 3 is wound up in an unevenly biased manner toward the upper side of the winding bobbin 30.

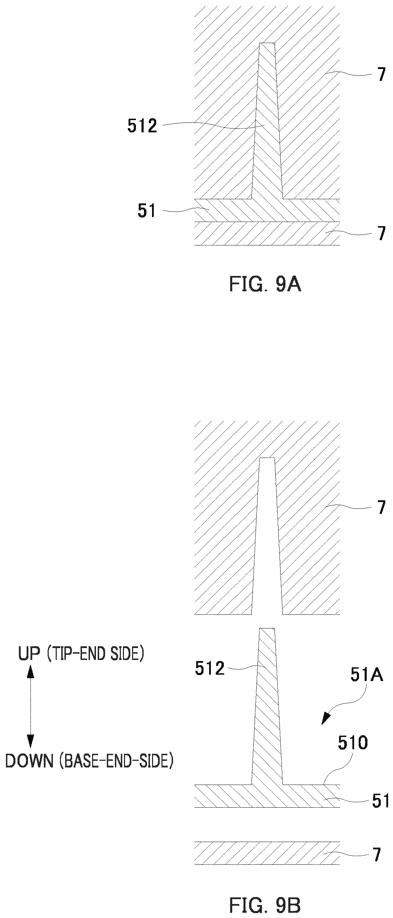

Figs. 9A and 9B are explanatory diagrams of a second cause.

Guide pins 512 are disposed along the transportation path of the cleaning element 3 within a range from the rotating shaft 60 to the winding bobbin 30. As described above, the guide pins 512 protrude upward from the bottom surface of the housing body 51 (first housing part 51A). The housing body 51 is an injection-molded component made of a resin, and as illustrated in Fig. 9A, the housing body 51 including the guide pins 512 is molded with a mold 7. To smoothly release the molded housing body 51 (guide pins 512) from the mold, the mold 7 is provided with a gradient (taper; draft). Therefore, as illustrated in Fig. 9B, a tapered surface (inclined surface) is formed on the guide pin 512 in a manner that the diameter gradually decreases from the base side (lower side; base-end side) toward the tip-end side (upper side). For example, the tapered surface of the guide pin 512 is inclined by approximately 1 degree with respect to the up-down direction. As a result, when the cleaning element 3 is being guided by the guide pin 512, the tapered surface of the guide pin 512 causes the cleaning element 3 to be led upward, and as illustrated in Fig. 7, the cleaning element 3 is wound up in an unevenly biased manner toward the upper side of the winding bobbin 30.

If the cleaning element 3 keeps being wound up at a position unevenly biased toward the upper side of the winding bobbin 30 as illustrated in Fig. 7, the cleaning element 3 may cross over the flange 32 on the upper side, making it impossible to wind the cleaning element around the barrel part 31 of the winding bobbin 30. Note that, although two causes were given above as examples in which the cleaning element 3 gets wound up in an unevenly biased manner toward the upper side of the winding bobbin 30, even in cases where the cause is different, if the cleaning element 3 keeps being wound up at an unevenly biased position of the winding bobbin 30, the cleaning element 3 may cross over the flange 32, making it impossible to wind the cleaning element around the barrel part 31 of the winding bobbin 30.

In the first embodiment, as illustrated in Fig. 6A, the barrel part 31 of the winding bobbin 30 has a tapered surface (inclined surface) which is inclined between the pair of flanges 32. Herein, the tapered surface is formed on the barrel part 31 in a manner that the diameter of the barrel part 31 gradually decreases from the upper side toward the lower side (i.e., from the tip-end side of the rotation rod 511 toward the base-end side). Note that the side of the barrel part 31 having a large diameter may be referred to as "large-diameter side", and the side of the barrel part 31 having a small diameter may be referred to as "small-diameter side". In this example, the large-diameter side is the upper side (the side of the flange 32 having the ratchet gear 32A), and the small-diameter side is the lower side (the side opposite from the upper side; the side of the flange 32 without the ratchet gear 32A). By providing a tapered surface on the barrel part 31, when the winding bobbin 30 rotates in the winding direction and the cleaning element 3 is wound up onto the barrel part 31, the cleaning element 3 can be led downward by the tapered surface of the barrel part 31. Thus, it is possible to inhibit the cleaning element 3 from being wound up at a position unevenly biased toward the upper side of the winding bobbin 30 (see Fig. 7), and thereby inhibit the cleaning element 3 from crossing over the flange.

As described above, when the winding bobbin 30 rotates in the winding direction, the used cleaning element 3 is displaced in the upward direction due to the rotation of the head member 10 (see Figs. 8A and 8B). On the other hand, as illustrated in Fig. 6A, the small-diameter side of the barrel part 31 of the winding bobbin 30 is located on the lower side, and the large-diameter side is located on the upper side. Therefore, when the used cleaning element 3 is being wound up onto the barrel part 31, the tapered surface of the barrel part 31 leads the cleaning element 3 downward. Stated differently, the cleaning element 3, which is displaced toward either the upward or downward direction (the upward direction in this example) due to the rotation of the head member 10, is led toward the opposite direction (the downward direction in this example) by the tapered surface of the barrel part 31 of the winding bobbin 30. Thus, is possible to inhibit the cleaning element 3 from being wound up at an unevenly biased position of the winding bobbin 30 due to the rotation of the head member 10. So, in cases where the cleaning element 3 is displaced in a predetermined direction (the upward direction in this example) with respect to winding bobbin 30 due to the rotation of the head member 10, it is preferable that the tapered surface of the barrel part 31 becomes wider toward the predetermined direction (the upward direction in this example).

Note that, as illustrated in Fig. 8A, since the first insertion hole 621 and the second insertion hole 622 are located sandwiching the rotation axis of the rotating shaft 60, the second insertion hole 622 is located in an eccentric position with respect to the rotation axis of the rotating shaft 60. In this case, when the rotating shaft 60 rotates together with the head member 10, the used cleaning element 3 will undergo displacement in the upward direction. That is, it is particularly effective to provide a tapered surface to the barrel part 31 of the winding bobbin 30 in cases where the first insertion hole 621 and the second insertion hole 622 are located sandwiching the rotation axis of the rotating shaft 60.

Further, as illustrated in Fig. 9B, the guide pin 512 has a tapered surface which is inclined with respect to the up-down direction (i.e., the direction in which the pair of flanges 32 is disposed). The tapered surface of the guide pin 512 becomes thinner toward the upper side, whereas the tapered surface of the barrel part 31 becomes thinner toward the lower side so as to be inclined in the opposite direction from the tapered surface of the guide pin 512. In this way, the cleaning element 3 which has been led upward by the tapered surface of the guide pin 512 can be led downward by the tapered surface of the barrel part 31, and thereby, it is possible to inhibit the cleaning element 3 from being wound up at an unevenly biased position of the winding bobbin 30 due to the tapered surface of the guide pin 512. So, it is particularly effective to provide a tapered surface to the barrel part 31 of the winding bobbin 30 in cases where the guide pin 512 has a tapered surface.

In the first embodiment, the inclination angle of the tapered surface of the barrel part 31 is greater than or equal to the inclination angle of the tapered surface of the guide pin 512. Note that the "inclination angle of the tapered surface" refers to the angle between the direction of the tapered surface's center axis (i.e., the up-down direction; the direction in which the pair of flanges 32 is disposed) and the generatrix of the tapered surface. In this example, the inclination angle of the tapered surface of the guide pin 512 is 1 degree, whereas the inclination angle of the tapered surface of the barrel part 31 is 3.5 degrees. Note, however, that the inclination angle of the guide pin 512 is not limited to 1 degree, and the inclination angle of the tapered surface of the barrel part 31 is not limited to 3.5 degrees.

It should be noted that the inclination angle of the tapered surface of the barrel part 31 may be equal to the inclination angle of the tapered surface of the guide pin 512. More specifically, when the inclination angle of the tapered surface of the guide pin 512 is 1 degree, the inclination angle of the tapered surface of the barrel part 31 may be 1 degree. By making the inclination angle of the tapered surface of the barrel part 31 equal to the inclination angle of the tapered surface of the guide pin 512, the displacement of the cleaning element 3 being led upward by the tapered surface of the guide pin 512 can be cancelled out by the displacement of the cleaning element 3 being led downward by the tapered surface of the barrel part 31. For example, in cases where the head member 10 does not rotate and the tapered surface of the guide pin 512 constitutes the main cause that the cleaning element 3 is wound up onto an unevenly biased position of the winding bobbin 30, it is preferable that the inclination angle of the tapered surface of the barrel part 31 is substantially equal to the inclination angle of the tapered surface of the guide pin 512. Note, however, that in cases where the cleaning element 3 is led upward not only by the tapered surface of the guide pin 512 but is also led upward by the rotation of the head member 10, it is preferable that the inclination angle of the tapered surface of the barrel part 31 is greater than the inclination angle of the tapered surface of the guide pin 512.

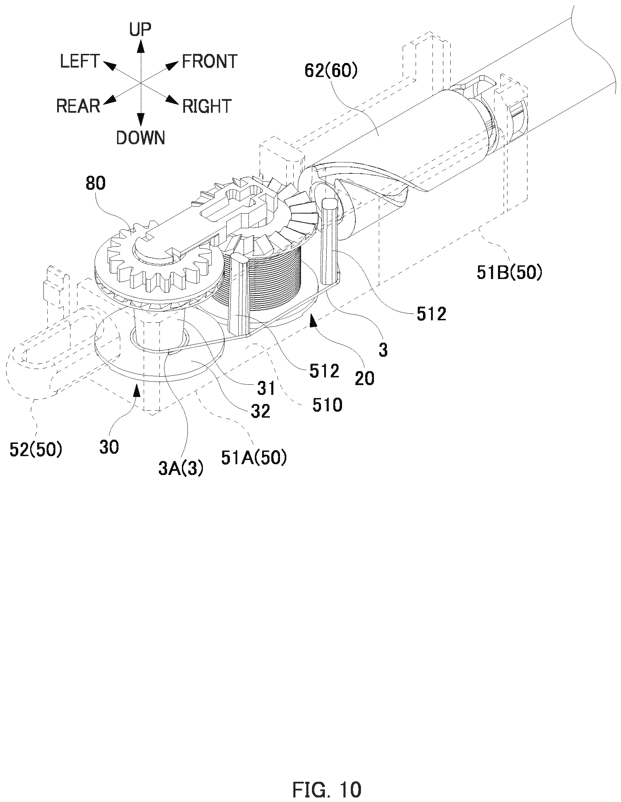

Fig. 10 is an explanatory diagram of an end part 3A of the cleaning element 3 fixed to the winding bobbin 30.

The end part 3A (the end part on the side where winding is started) of the cleaning element 3 is fixed to the small-diameter side of the barrel part 31 of the winding bobbin 30. In this example, the tapered surface of the winding bobbin 30 becomes narrower toward the lower side, and the end part 3A of the cleaning element 3 is fixed with an adhesive to the corner between the barrel part 31 and the flange 32 on the lower side (small-diameter side) of the winding bobbin 30. By fixing the end part 3A of the cleaning element 3 to the small-diameter side of the barrel part 31 in an unevenly biased manner, winding of the cleaning element 3 starts from the small-diameter side (lower side) of the barrel part 31, and thus, it is possible to inhibit the cleaning element 3 from being wound up at a position unevenly biased toward the upper side of the winding bobbin 30 (see Fig. 7) .

Incidentally, the cleaning element 3 wound in advance on the supply bobbin 20 is eventually wound up onto the winding bobbin 30. Therefore, it is necessary to configure the barrel part 31 of the winding bobbin 30 such that the capacity of the winding bobbin 30 (the length of the cleaning element 3 that can be wound) is substantially equal to the capacity of the supply bobbin 20. If the diameter of the small-diameter side of the winding bobbin 30 is substantially equal to the diameter of the barrel part of the supply bobbin 20, the diameter of the large-diameter side of the winding bobbin 30 will become larger than the diameter of the barrel part of the supply bobbin 20, and thus, the capacity of the winding bobbin 30 tends to become smaller than the capacity of the supply bobbin 20. (As a result, when the cleaning element 3 wound in advance on the supply bobbin 20 keeps being wound up by the winding bobbin 30, the cleaning element 3 may easily cross over the flange 32 on the large-diameter side of the winding bobbin 30.)

Therefore, it is preferable that the diameter of the small-diameter side of the winding bobbin 30 is smaller than the diameter of the barrel part of the supply bobbin 20. In this way, the diameter of the large-diameter side of the barrel part 31 can be kept small and the length of the cleaning element 3 that can be wound on the winding bobbin 30 can be increased (i.e., the capacity of the winding bobbin 30 can be increased), thus making it possible to increase the number of times that the cleaning tool 100 can be used.

As illustrated in Fig. 6A, the winding mechanism 91 (in this example, the bobbin-side ratchet gear 32A) for rotating the winding bobbin 30 is disposed on one flange 32 of the pair of flanges 32. If the winding mechanism 91 is disposed on the flange 32 on the small-diameter side, the joining part between the flange 32 and the barrel part 31 may easily be damaged by torque when the winding bobbin 30 receives force from the winding mechanism 91. Therefore, in the first embodiment, the winding mechanism 91 (in this example, the bobbin-side ratchet gear 32A) is disposed on the flange 32 on the large-diameter side. In this way, it is possible to increase the strength of the joining part between the barrel part 31 and the flange 32 where the winding mechanism 91 is disposed, thus increasing the strength against torque when the winding bobbin 30 receives force from the winding mechanism 91. Note that it is particularly effective to dispose the winding mechanism 91 on the large-diameter-side flange 32 in cases where the diameter of the small-diameter side of the winding bobbin 30 is smaller than the diameter of the barrel part of the supply bobbin 20 as described above.

### SECOND EMBODIMENT:

Next, a cleaning tool of a second embodiment will be described. In the cleaning tool of the second embodiment, the shape of the guide pin 512 is different compared to the cleaning tool 100 of the first embodiment. The members other than the guide pin (and peripheral members thereof) have the same structure as in the first embodiment, and explanation thereof is therefore omitted hereinbelow.

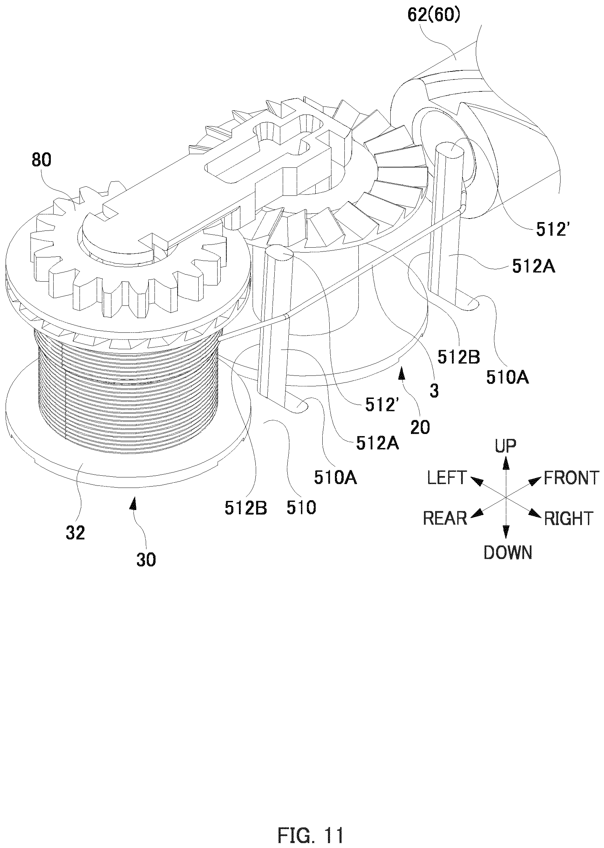

Fig. 11 is an explanatory diagram of the second embodiment.

Guide pins 512' protrude upward from the bottom surface 510 of the first housing part 51A from which the rotation rod 511 (not illustrated in Fig. 11; see Fig. 3) for the winding bobbin 30 protrudes. The guide pins 512' are disposed along the transportation path of the cleaning element 3 within a range from the rotating shaft 60 to the winding bobbin 30, and guide the cleaning element 3. A side surface of the guide pin 512' comes into contact with the cleaning element 3 to guide the cleaning element 3. In the description below, of the side surface of the guide pin 512', a surface that comes into contact with the cleaning element 3 is referred to as "contact surface 512A", and a surface that does not come into contact with the cleaning element 3 (i.e., a surface other than the contact surface 512A) is referred to as "non-contact surface 512B".

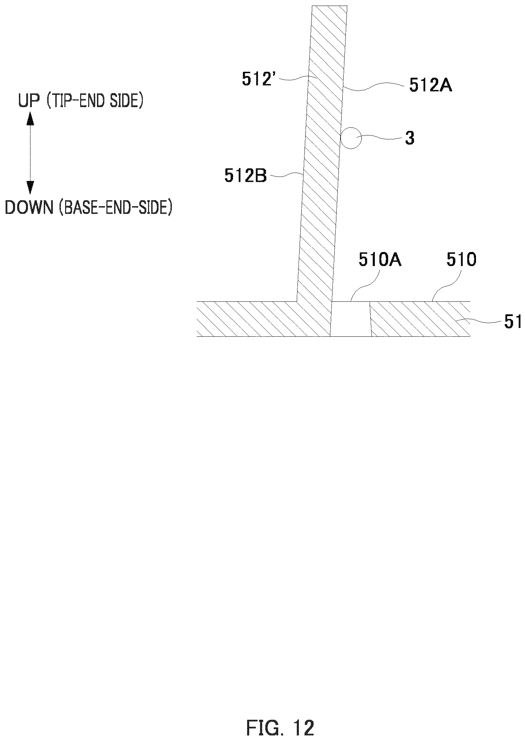

Fig. 12 is an explanatory diagram of the shape of the guide pin 512' of the second embodiment.

The contact surface 512A of the guide pin 512' of the second embodiment is configured as an inclined surface which is inclined in a direction to guide the cleaning element 3 toward the bottom surface 510 side. More specifically, the contact surface 512A is inclined toward the opposite side compared to the contact surface (tapered surface) of the guide pin 512 illustrated in Fig. 9B, and is inclined such that the side toward the bottom surface 510 is located more inwardly. The contact surface 512A is inclined such that the angle with respect to the bottom surface 510 is less than 90 degrees. When the cleaning element 3 under tension contacts the contact surface 512A which is constituted by this inclined surface, the cleaning element 3 receives force from the contact surface 512A in a direction toward the bottom surface 510, and as a result, the cleaning element is led toward the bottom surface 510 side by the contact surface 512A.

According to the second embodiment, when the winding bobbin 30 rotates in the winding direction and the cleaning element 3 is wound up onto the barrel part 31, the cleaning element 3 can be led downward (toward the bottom surface 510 side) by the contact surface 512A of the guide pin 512'. Thus, it is possible to inhibit the cleaning element 3 from being wound up at a position unevenly biased toward the upper side of the winding bobbin 30 (see Fig. 7), and thereby inhibit the cleaning element 3 from crossing over the flange 32.

It should be noted that the flange 32 on the lower side (the bottom surface 510 side) of the winding bobbin 30 is supported by the bottom surface 510 of the first housing part 51A, and therefore has a structure wherein the flange's outer side is covered by the bottom surface 510. In contrast, as regards the flange 32 on the upper side (the opposite side from the bottom surface 510) of the winding bobbin 30, the flange's outer side is not covered but has an open structure. Due to this structure, there is a low possibility that the cleaning element 3 will cross over the flange 32 on the lower side (the bottom surface 510 side) of the winding bobbin 30, but there is a high possibility that the cleaning element 3 will cross over the flange 32 on the upper side (the opposite side from the bottom surface 510) of the winding bobbin 30. Therefore, it is effective to lead the cleaning element 3 toward the bottom surface 510 side by means of the contact surface 512A.

Further, since the flange 32 on the lower side (the bottom surface 510 side) of the winding bobbin 30 has a structure that is covered by the bottom surface 510, the winding mechanism 91 (in this example, the bobbin-side ratchet gear 32A) for rotating the winding bobbin 30 is disposed on the flange 32 on the upper side (the opposite side from the bottom surface 510) (see Fig. 6A). Due to this structure, if the cleaning element 3 crosses over the flange 32 on the upper side (the opposite side from the bottom surface 510) of the winding bobbin 30, the cleaning element 3 may get entangled in the winding mechanism 91. Therefore, in cases where the winding mechanism 91 is disposed on the flange 32 on the opposite side from the bottom surface 510, it is particularly effective to lead the cleaning element 3 toward the bottom surface 510 side by means of the contact surface 512A.

Incidentally, the contact surface 512A of the guide pin 512' is inclined toward the opposite side compared to the tapered surface of the guide pin 512 illustrated in Fig. 9B. It is therefore conceivable that there may be difficulty in molding the contact surface 512A by the manufacturing method illustrated in Fig. 9B. Below, a method for manufacturing the guide pin 512' of the second embodiment will be described.

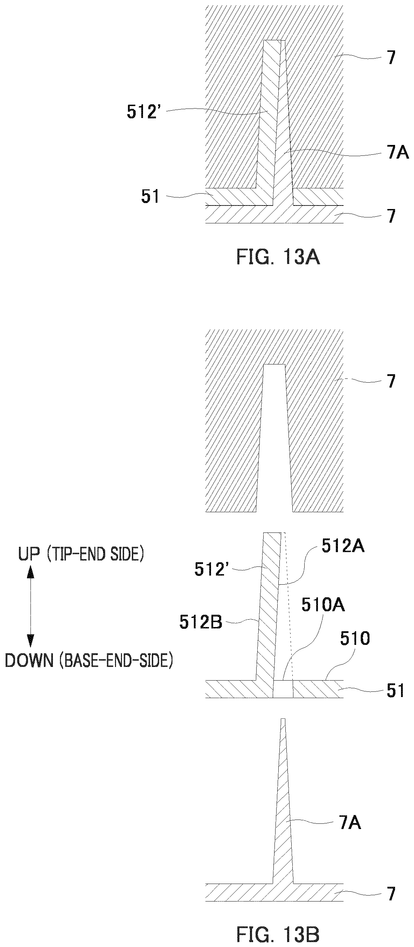

Figs. 13A and 13B are explanatory diagrams illustrating a method for manufacturing the guide pin 512' of the second embodiment. The contact surface 512A of the guide pin 512' of the second embodiment is molded by a projection part 7A which projects from the mold 7 on the lower side (i.e., the mold which is withdrawn downward with respect to the guide pin). In this way, it is possible to mold the contact surface 512A inclined toward the opposite side compared to the tapered surface of the guide pin 512 illustrated in Fig. 9B. Stated differently, it is possible to mold the contact surface 512A inclined in a direction capable of leading the cleaning element 3 toward the bottom surface 510 side (i.e., the contact surface 512A inclined such that the side toward the bottom surface 510 is located more inwardly).

In cases of molding the guide pin 512' as illustrated in Fig. 13B, a hole 510A for withdrawing the projection part 7A (the mold for molding the contact surface 512A) will be formed in the bottom surface 510 at the base of the contact surface 512A. More specifically, forming a hole 510A in the bottom surface 510 at the base of the contact surface 512A enables the projection part 7A to be withdrawn downward as illustrated in Figs. 13A and 13B, thus making it possible to mold the contact surface 512A.

In a structure wherein the guide pin 512' protrudes from the bottom surface 510, the hole 510A needs to be formed at the base in order to form an inclined surface like the contact surface 512A (i.e., an inclined surface inclined such that the bottom-surface side is located more inwardly). Therefore, in a structure wherein the guide pin 512' protrudes from the bottom surface 510, it is difficult to form an inclined surface like the contact surface 512A (i.e., an inclined surface inclined such that the bottom-surface side is located more inwardly) over the entire circumferential surface of the side surface of the guide pin 512'. So, in a structure wherein the guide pin 512' protrudes from the bottom surface 510, it is preferable that the side surface (the non-contact surface 512B) of the guide pin 512' other than the contact surface 512A is constituted by an inclined surface inclined in the same direction as the tapered surface of the guide pin 512 illustrated in Fig. 9B. Stated differently, in a structure wherein the guide pin 512' protrudes from the bottom surface 510, it is preferable that the side surface (the non-contact surface 512B) of the guide pin 512' other than the contact surface 512A is constituted by an inclined surface inclined such that the side toward the bottom surface 510 is located more outwardly (i.e., an inclined surface inclined in the opposite direction from the contact surface 512A), even if the contact surface 512A is configured as an inclined surface inclined such that the bottom-surface side is located more inwardly. Note, however, that in cases where the guide pin is not structured to protrude from the bottom surface 510 but is instead formed on another member separate from the first housing part 51A as described below, an inclined surface, whose bottom-surface side is located more inwardly, can be formed over the entire circumferential surface of the side surface of the guide pin.

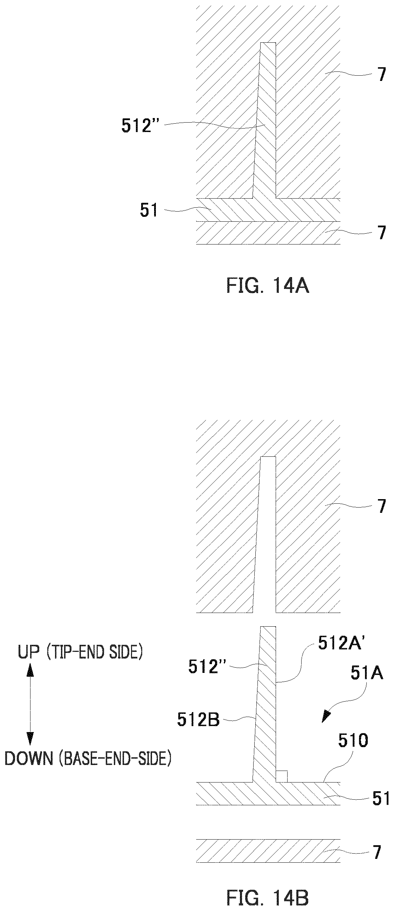

Figs. 14A and 14B are explanatory diagrams illustrating the shape of a guide pin 512'' of a first modified example and a method for manufacturing the same.

The contact surface 512A of the guide pin 512'' of the first modified example is a surface parallel to the rotation rod 511 for the winding bobbin 30 (i.e., a surface parallel to the up-down direction) and is not inclined. More specifically, in the first modified example, the contact surface 512A is a surface parallel to the rotation rod 511 for the winding bobbin 30, whereas the non-contact surface 512B is an inclined surface whose bottom-surface side is located more outwardly (i.e., an inclined surface that is inclined in the same direction as the tapered surface of the guide pin 512 illustrated in Fig. 9B). The contact surface 512A of the first modified example forms an angle of 90 degrees with the bottom surface 510. Since the contact surface 512A of the guide pin 512'' of the first modified example is not inclined, it does not lead the cleaning element 3 toward the bottom surface 510 side. However, compared to the guide pin 512 illustrated in Fig. 9B, the guide pin 512'' of the first modified example can inhibit the cleaning element 3 from being led upward. That is, even when the contact surface 512A is a surface parallel to the rotation rod 511 for the winding bobbin 30 as in this guide pin 512'' of the first modified example, it is possible to inhibit the cleaning element 3 from being led upward and thus inhibit the cleaning element 3 from crossing over the flange 32.

Further, in case of the guide pin 512'' of the first modified example, the contact surface 512A can be molded using the upper-side mold 7 (the mold which is withdrawn upward with respect to the guide pin), and therefore, the projection part 7A (see Figs. 13A and 13B) does not have to be formed on the lower-side mold 7. Therefore, in cases where the contact surface 512A is a surface parallel to the rotation rod 511 for the winding bobbin 30 as in the guide pin 512" of the first modified example, there is an advantage that the guide pin 512'' can be manufactured easily. Further, in cases where the contact surface 512A is a surface parallel to the rotation rod 511 for the winding bobbin 30 as in this guide pin 512'' of the first modified example, there is also an advantage that no hole 510A needs to be formed in the bottom surface 510 of the first housing part 51A.

It should be noted that, in cases where the contact surface 512A is a surface parallel to the rotation rod 511 for the winding bobbin 30 as in the first modified example, it is preferable that the contact surface 512A occupies less than or equal to half the side surface of the guide pin 512'' in the circumferential direction. In this way, the side surface of the guide pin 512'', including the contact surface 512A, can be molded with the upper-side mold 7 and the upper-side mold 7 can be withdrawn upward with respect to the guide pin, as illustrated in Figs. 14A and 14B.

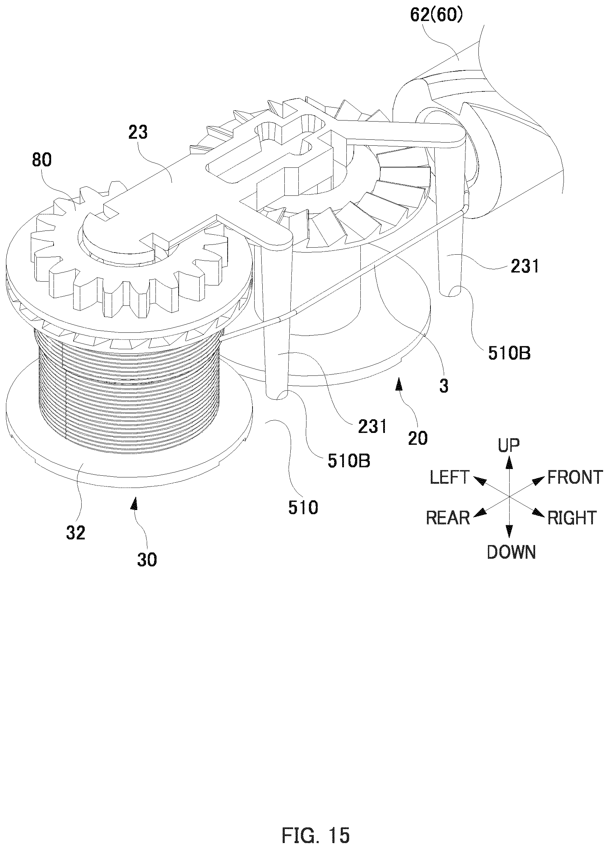

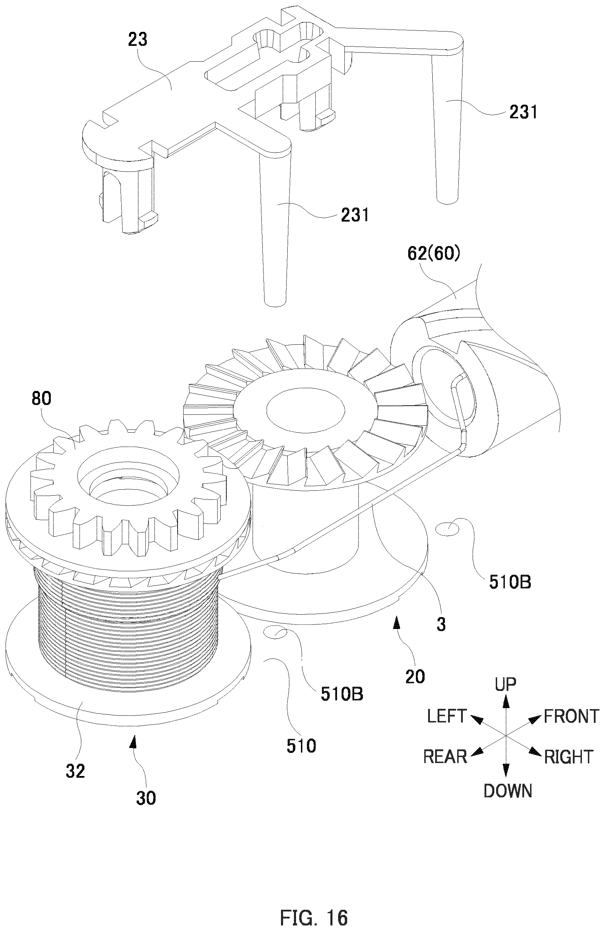

Fig. 15 is an explanatory diagram of a guide pin of a second modified example. Fig. 16 is an explanatory diagram in which a retaining member 23 illustrated in Fig. 15 has been removed.

A retaining member 23 is disposed between the supply bobbin 20 and the winding bobbin 30. The retaining member 23 retains the distance between the rotation rod 511 for the supply bobbin 20 and the rotation rod 511 for the winding bobbin 30, and inhibits the rotation rod 511 for the supply bobbin 20 and the rotation rod 511 for the winding bobbin 30 from collapsing and deforming. The retaining member 23 is located above the supply bobbin 20 and the winding bobbin 30 (i.e., on the opposite side from the bottom surface 510).

In the second modified example, the retaining member 23 includes guide pins 231. The guide pins 231 protrude from the retaining member 23 toward the bottom surface 510. The guide pin 231 is an injection-molded component made of a resin, and substantially similar to the guide pin 512 illustrated in Figs. 9A and 9B, the guide pin is molded with a mold. To smoothly release the molded guide pin 231 from the mold, the mold is provided with a gradient (taper; draft). Therefore, a tapered surface (inclined surface) is formed on the guide pin 231 in a manner that the diameter gradually decreases from the base side toward the tip-end side. Thus, the side surface of the guide pin 231 becomes a tapered surface (inclined surface) in which the diameter decreases toward the bottom surface 510 side. Stated differently, also in the second modified example, the side surface (contact surface) where the guide pin 231 contacts the cleaning element 3 is formed as an inclined surface inclined in a direction capable of leading the cleaning element 3 toward the bottom surface 510 side. Thus, also in the second modified example, it is possible to inhibit the cleaning element 3 from being led upward (toward the opposite side from the bottom surface 510) and thus inhibit the cleaning element 3 from crossing over the flange 32.

In the second modified example, the guide pin 231 is disposed on a member separate from the first housing part 51A (the member constituting the bottom surface 510), and thus, an inclined surface, whose bottom-surface side is located more inwardly, can be formed over the entire circumferential surface of the side surface of the guide pin. It should be noted that, although the guide pin 231 is disposed on the retaining member 23 in the second embodiment, the guide pin may be disposed on another member separate from the retaining member 23. For example, in cases where a cover member is mounted to the first housing part 51A so as to cover the housing space inside the first housing part 51A and the cover member is disposed in opposition to the bottom surface 510, a guide pin protruding toward the bottom surface 510 may be disposed on the cover member.

As illustrated in Figs. 15 and 16, in the second modified example, the tip end of the guide pin 231 is inserted in a hole 510B formed in the bottom surface 510. In this way, both ends of the guide pin 231 can be fixed, and thus, even when the cleaning element 3 under tension comes into contact with the guide pin 231, deformation of the guide pin 231 can be inhibited. Note, however, that the tip end of the guide pin 231 does not have to be inserted in the hole 510B (i.e., the tip end of the guide pin 231 does not have to be fixed) and the guide pin 231 may be configured in a cantilever fashion.

Incidentally, the cleaning tool of the second embodiment, including the first and second modified examples, is configured similarly to the first embodiment, except for the guide pin (and peripheral members thereof). Therefore, also in the second embodiment, the barrel part 31 (not illustrated in the second embodiment) of the winding bobbin 30 has a tapered surface which is inclined between the pair of flanges 32, as in the barrel part 31 of the winding bobbin 30 of the first embodiment illustrated in Fig. 6A. Thus, also in the second embodiment, it is possible to inhibit the cleaning element 3 from being wound up at a position unevenly biased toward the upper side of the winding bobbin 30 (see Fig. 7), and thereby inhibit the cleaning element 3 from crossing over the flange, as in the first embodiment.

In the second embodiment, since the contact surface of the guide pin 512' and the guide pin 231 is an inclined surface inclined in a direction capable of leading the cleaning element 3 toward the bottom surface 510 side (or a surface parallel to the rotation rod 511 as illustrated in Fig. 14B), even if the barrel part 31 of the winding bobbin 30 has a circular cylinder shape as in the comparative example of Fig. 6B, the cleaning element 3 can be inhibited from being wound up at a position unevenly biased toward the upper side of the winding bobbin 30 (see Fig. 7), and the cleaning element 3 can thus be inhibited from crossing over the flange. Note, however, that by forming a tapered surface on the barrel part 31 of the winding bobbin 30 as in Fig. 6A, it is possible to synergistically inhibit, together with the guide pin 512' or the guide pin 231 of the second embodiment, the cleaning element 3 from being wound up at a position unevenly biased toward the upper side of the winding bobbin 30.

### OTHER EMBODIMENTS:

The foregoing embodiments are for facilitating the understanding of the present invention, and are not to be construed as limiting the present invention. The present invention may be modified and/or improved without departing from the gist thereof, and it goes without saying that the present invention encompasses equivalents thereof.

### REFERENCE SIGNS LIST

3: Cleaning element;
7: Mold;
10: Head member;
11: Head part;
20: Supply bobbin;
23: Retaining member;
231: Guide pin;
30: Winding bobbin;
31: Barrel part;
32: Flange;
32A: Bobbin-side ratchet gear;
40: Tool body;
40A: Casing;
41: Support body;
42: Support part;
43: Rack;
44: Protrusion part;
50: Insertion part;
51: Housing body;
510: Bottom surface;
510A, 510B: Hole;
51A: First housing part;
511: Rotation rod;
512, 512', 512": Guide pin;
512A: Contact surface;
512B: Non-contact surface;
51B: Second housing part;
52: Spring retaining part;
55: Coil spring;
60: Rotating shaft;
61: Shaft part;
62: Rotating cylinder part;
62A: Cam groove part;
621: First insertion hole;
622: Second insertion hole;
70: Cylinder body;
71: Base cylinder part;
72: Abutment part;
73: Tip-end cylinder part;
75: Cylinder part spring;
80: Gear member;
81: Pinion;
82: Gear-side ratchet gear;
91: Winding mechanism;
91A: Rack-and-pinion mechanism;
91B: Ratchet mechanism;
92: Rotating mechanism;
100: Cleaning tool.

## Claims

1. A cleaning tool comprising:
a cleaning element;
a head member configured to press the cleaning element against an object to be cleaned;
a supply bobbin on which the cleaning element is wound, the supply bobbin configured to supply the cleaning element to the head member; and
a winding bobbin configured to wind up the cleaning element from the supply bobbin via the head member, wherein
the winding bobbin includes a barrel part onto which the cleaning element is to be wound, and a pair of flanges disposed respectively on both ends of the barrel part, and
the barrel part has a tapered surface which is inclined between the pair of flanges.

2. The cleaning tool according to claim 1, wherein
in association with a movement of being pressed against the object to be cleaned, the head member rotates about a direction intersecting with a direction in which the pair of flanges is disposed,
due to rotation of the head member, the cleaning element is displaced in a predetermined direction with respect to the winding bobbin, and
the tapered surface of the barrel part becomes wider toward the predetermined direction.

3. The cleaning tool according to claim 2, wherein
the cleaning tool further comprises a rotating shaft configured to retain the head member and rotate together with the head member,
the rotating shaft has a first insertion hole configured
to pass therethrough the cleaning element to be supplied to the head member, and a second insertion hole configured to pass therethrough the cleaning element to be transported from the head member to the winding bobbin,
the first insertion hole and the second insertion hole are located sandwiching a rotation axis of the rotating shaft, and
when the rotating shaft rotates together with the head member, the second insertion hole is displaced in the predetermined direction.

4. The cleaning tool according to claim 1, wherein
the cleaning tool further comprises a guide pin located within a range from the head member to the winding bobbin, the guide pin configured to guide the cleaning element, the guide pin having a tapered surface which is inclined with respect to the direction in which the pair of flanges is disposed,
the tapered surface of the barrel part and the tapered surface of the guide pin are inclined in opposite directions.

5. The cleaning tool according to claim 4, wherein
an inclination angle of the tapered surface of the barrel part is greater than or equal to an inclination angle of the tapered surface of the guide pin.

6. The cleaning tool according to claim 5, wherein
the inclination angle of the tapered surface of the barrel part is equal to the inclination angle of the tapered surface of the guide pin.

7. The cleaning tool according to any one of claims 1 to 6, wherein
an end part of the cleaning element is fixed to a small-diameter side of the barrel part.

8. The cleaning tool according to any one of claims 1 to 6, wherein
a diameter of the small-diameter side of the barrel part of the winding bobbin is smaller than a diameter of a barrel part of the supply bobbin.

9. The cleaning tool according to any one of claims 1 to 6, wherein
the flange on a large-diameter side of the tapered surface of the barrel part includes a mechanism configured to rotate the winding bobbin.

10. The cleaning tool according to claim 1, wherein
the cleaning tool further comprises
a housing part configured to house the winding bobbin, the housing part having a rotation rod for the winding bobbin protruding from a bottom surface of the housing part, and
a guide pin located within a range from the head member to the winding bobbin, the guide pin configured to guide the cleaning element, and
a contact surface of the guide pin which is a side surface thereof that comes into contact with the cleaning element is a surface parallel to the rotation rod or is an inclined surface configured to guide the cleaning element toward the bottom surface side.

11. The cleaning tool according to claim 10, wherein the flange on an opposite side from the bottom surface includes a mechanism configured to rotate the winding bobbin.

12. The cleaning tool according to claim 10 or 11, wherein
the guide pin protrudes from the bottom surface of the housing part, and
a hole is formed in the bottom surface at a base of the contact surface.

13. The cleaning tool according to claim 12, wherein
the side surface of the guide pin other than the contact surface is constituted by a surface inclined in an opposite direction from the inclined surface.

14. The cleaning tool according to claim 10 or 11, wherein
the guide pin protrudes toward the bottom surface from a member separate from the housing part.

15. The cleaning tool according to claim 14, wherein
a tip end of the guide pin is inserted in a hole in the bottom surface.
